# EUROPÄISCHE PATENTANMELDUNG

(11) **EP 4 775 172 A1**
(43) Veröffentlichungstag der Anmeldung: **15.07.2026**
(21) Anmeldenummer: 25194156.3
(22) Anmeldetag: 05.08.2025
(51) Int. Cl.: A61C 7/10

(54) **PORTABLES ZAHNREINIGUNGSGERÄT**

(30) Priorität: 14.01.2025 CH 342025
(71) Anmelder: Brändli, Paul, 8800 Thalwil ZH (CH)
(72) Erfinder: Brändli, Paul, 8800 Thalwil ZH (CH)
(74) Vertreter: Pestalozzi, Deborah

(57) **Zusammenfassung**

Ein portables Zahnreinigungsgerät (10) hat ein Gehäuse (20), eine in diesem angeordnete Pumpe (40), eine elektronische Kontrolleinheit (60), einen Flüssigkeitsbehälter (30) für eine Aufnahme einer zur Reinigung vorgesehenen Flüssigkeit (31), und eines mit diesem verbundenen Abgaberöhrchen (41, 43), welches in einer Abgabeöffnung (44) endet. Dabei wird die Flüssigkeit (31) aus dem Flüssigkeitsbehälter über die Pumpe (40) zur Abgabeöffnung (44) gefördert. Eine Temperaturmesseinrichtung (70) ist in oder an dem Abgaberöhrchen (41, 43) zur Bestimmung der Temperatur der Flüssigkeit (31) vorgesehen. Diese ist mit der elektronischen Kontrolleinheit (60) verbunden, damit diese die Pumpe (40) bei einer Betätigung (61) des Zahnreinigungsgerätes (10) nur dann anschaltet, wenn die Temperatur der abgegebenen gepumpten Flüssigkeit zwischen 45 und 55 Grad Celsius beträgt.

## Beschreibung

### TECHNISCHES GEBIET

Die vorliegende Erfindung betrifft ein portables Zahnreinigungsgerät mit einem Gehäuse, mit einer in dem Gehäuse angeordneten Pumpe, mit einer elektronischen Kontrolleinheit, mit einem Flüssigkeitsbehälter für eine Aufnahme einer zur Reinigung vorgesehenen Flüssigkeit, und mit einem mit diesem verbundenen Abgaberöhrchen, welches in einer Abgabeöffnung endet, wobei die Flüssigkeit aus dem Flüssigkeitsbehälter über die Pumpe zur Abgabeöffnung förderbar ist.

### STAND DER TECHNIK

Aus der IN 2022/11009689A ist ein Gerät zur Aufrechterhaltung der persönlichen Hygiene bekannt, bei dem an einem Gehäuse eine Kl-fähige Kamera vorgesehen ist, um Bilder eines zu reinigenden Zahns/Auges eines Benutzers aufzunehmen, bei dem im Gehäuse eine Vielzahl elektronisch gesteuerter Ventile zur Abgabe von Flüssigkeiten zur Aufrechterhaltung der persönlichen Hygiene bei Betätigung durch einen Mikrocontroller vorgesehen sind, und bei dem im Gehäuse eine Vielzahl von Kammern vorgesehen sind, die mit den Düsen verbunden sind, um die Flüssigkeiten zur persönlichen Hygiene aufzunehmen. Aus dem Gehäuse ragt ein Arm, an dessen Ende eine motorisierte Irisblende vorgesehen ist, die mit jedem der Ventile verbunden ist, um die Flüssigkeit mit optimalem Druck abzugeben, um die Verschmutzung zu entfernen.

Aus der IN2021/411028467A ist ein Herstellungsverfahren für eine flüssige Zahnpasta-Formulierung angegeben, die es ermöglicht, den Mund ohne Hilfe einer Zahnbürste auszuspülen, und dabei verschiedene natürliche und anderen erfrischende Aromen vorschlägt und auch eine bessere Reinigungswirkung bieten soll. Das Verfahren umfasst die folgenden Schritte: a. Auflösen der Schleifmittel Calciumcarbonat und Natriummetasilikat zusammen mit dem Emulgator Natriumcarboxymethylcellulose (CMC) in Umkehrosmosewasser im Hauptrührbehälter; b. Zugabe von Sorbitol-Flüssigkeit und Xanthangummi zum Hauptrührbehälter, um eine Gummimischung zu bilden; c. Zugabe von D-Sorbit und Wasserstoffperoxidlösung in den Hauptrührbehälter; d. Lösen von Natriummonofluorphosphat, Kaliumnitrat, L-Arginin und Kaliumsorbat in Wasser im Sekundärrührbehälter, um eine Lösung zu bilden, und Zugabe der Lösung in den Hauptrührbehälter und Lösen der Lösung in der Gummimischung; e. Lösen von Natriumsaccharin und Zinkcitrat in Wasser im sekundären Rührbehälter auflösen und Lösung in den Hauptrührbehälter überführen; f. Tetranatriumpyrophosphat und Natriumhydrogencarbonat in heissem Wasser (von einem Warmwasserbereiter) im sekundären Rührbehälter auflösen, um eine Lösung zu bilden, Lösung rühren, bis die Temperatur der Lösung 40 Grad Celsius erreicht, und Lösung in den Rührbehälter umfüllen; g. Benzylalkohol in den Hauptrührbehälter geben und den Rührvorgang starten; h. Aromen und synthetische Farbstoffe in den Hauptrührbehälter geben; i. die Drehzahl des Rührwerks reduzieren und Natriumlaurylsulfat in den Hauptrührbehälter geben; und j. flüssige Zahnpasta filtern und in Flaschen zur Abgabe umfüllen.

Aus der US 2009/053672 A1 ist ein Abgabegerät für die Durchführung einer bedienergesteuerten Zahnspülung mit variabler Temperatur bekannt, bei dem dieses mit zwei Wasserversorgungsschläuchen für Kalt- und Heisswasser ausgestattet ist. Ein kalibriertes Temperaturregelventil am Auslassende des Zahnirrigators ermöglicht es dem Benutzer, wie einem Zahnarzt oder Zahntechniker, den Wasserstrahl des Irrigators an die Komfortbedürfnisse des Patienten anzupassen. Die Auslassdüsen sind austauschbar, indem diese zur Sterilisation auf den Hauptkörper des Geräts auf- und abgeschraubt werden können.

Aus der DE 3023816 A1 ist eine Vorrichtung zur Pflege der Mundhöhle und der Zähne sowie zur Massage des Zahnfleisches bekannt, die ein längsförmiges Element aufweist, das im Innern hohl ist und das im Wesentlichen wie der Zahnbogen geformt und dimensioniert ist, welches zwei gegenüberliegende Hauptoberflächen für die Aufnahme der Oberkiefer- und der Unterkieferzähne aufweist und das weiterhin auf seinen zwei gegenüberliegenden Oberflächen eine Vielzahl von Löchern aufweist, welche mit seinem Innenraum in Verbindung stehen, wobei der Innenraum durch ein biegsames Röhrchen mit einem Anschluss zur Befestigung des Röhrchens an einen Hahn einer Wasserzuführung verbunden ist.

Aus der DE 24 09 752 A1 ist eine weitere solche Vorrichtung zur Reinigung der Zähne, insbesondere Zahnhälse, Zahntaschen u. dgl. bekannt, die aus einem an eine Warmwasserquelle, insbesondere an den Schlauch einer Dusche anschließbaren Düsenkopf mit Düsenrohr und Düse besteht.

### DARSTELLUNG DER ERFINDUNG

Ausgehend von diesem Stand der Technik ist es eine Aufgabe der vorliegenden Erfindung, eine verbesserte Vorrichtung für die Mundhygiene anzugeben.

Ein portables Zahnreinigungsgerät umfasst ein Gehäuse, eine in dem Gehäuse angeordneten Pumpe, eine elektronischen Kontrolleinheit, einen Flüssigkeitsbehälter für eine Aufnahme einer zur Reinigung vorgesehenen Flüssigkeit, und ein mit diesem verbundenen Abgaberöhrchen, welches in einer Abgabeöffnung endet, wobei die Flüssigkeit aus dem Flüssigkeitsbehälter über die Pumpe zur Abgabeöffnung förderbar ist. Bei einem solchen portablen Zahnreinigungsgerät wird die oben angegebene Aufgabe dadurch gelöst, dass eine Temperaturmesseinrichtung in oder an dem Abgaberöhrchen zur Bestimmung der Temperatur der Flüssigkeit vorgesehen ist, wobei diese Temperaturmesseinrichtung mit der elektronischen Kontrolleinheit verbunden ist, und dass die elektronische Kontrolleinheit ausgestaltet ist, die Pumpe bei einer Betätigung des Zahnreinigungsgerätes nur anzuschalten, wenn die Temperatur der abgegebenen gepumpten Flüssigkeit zwischen 45 und 55 Grad Celsius beträgt.

Das Zahnreinigungsgerät nach dem Stand der Technik wird zu einem Mundhöhlenreinigungsgerät, da durch die in die Mundhöhle gespritzte Flüssigkeit die ganze Mundhöhle reinigbar ist. Bei der Anwendung braucht der Benutzer des Gerätes keine Zahnpasta mehr. Es reicht nun bei einer Temperatur zwischen 45 bis 55 C° liegendes Wasser, dem vorzugsweise abends nach der Reinigung zusätzlich eine Mundspülung (Fluormundwasser) folgt. Da die meisten in der Mundhöhle befindlichen Bakterien bei einer Temperatur von über 43 C° absterben, befinden sich nach der Reinigung mit dem Gerät bei sichergestellten 45 C° oder leicht darüber keine schädlichen Bakterien mehr in der Mundhöhle. Eine Maximaltemperatur ist vorgegeben, um den Benutzer vor zu hohen Temperaturen zu schützen. Der Vorteil dieser Reinigungsart ist, dass nach Verbleiben der Flüssigkeit im Mund diese heruntergeschluckt werden kann, was zudem eine Erhöhung der getrunkenen Wassermenge pro Tag mit sich bringt. Das Gerät wird ohne Zahnpasta betrieben, so dass das Trinken der Flüssigkeit unbedenklich ist.

Bei einem Schlucken von ca. 200 ml Wasser pro Anwendung, trinkt der Benutzer automatisch 400-600 ml Wasser pro Tag mehr, was gut für die Gesundheit ist. Die Ersparnis beim Zähneputzen ist enorm: keine Zahnpasta, die Zahnzwischenräume werden ohne mechanische Hilfsmittel gereinigt, das Zahnfleisch wird durch den Wasserstrahl massiert, kein Mundgeruch, kein Zahnstein, keine schädlichen Bakterien.

Weitere Ausführungsformen sind in den abhängigen Ansprüchen angegeben.

### KURZE BESCHREIBUNG DER ZEICHNUNG

Bevorzugte Ausführungsformen der Erfindung werden im Folgenden anhand der Zeichnung beschrieben, die lediglich zur Erläuterung dienen und nicht einschränkend auszulegen sind. Die Figuren zeigen einen schematischen Aufbau eines Reinigungsgeräts nach einem Ausführungsbeispiel der Erfindung:
- Fig. 1: zeigt eine schematische Darstellung eines ersten Ausführungsbeispiels eines Mundhöhlenreinigungsgerätes gemäss der Erfindung; und
- Fig. 2: zeigt eine schematische Darstellung eines zweiten Ausführungsbeispiels eines Mundhöhlenreinigungsgerätes gemäss der Erfindung.

### BESCHREIBUNG BEVORZUGTER AUSFÜHRUNGSFORMEN

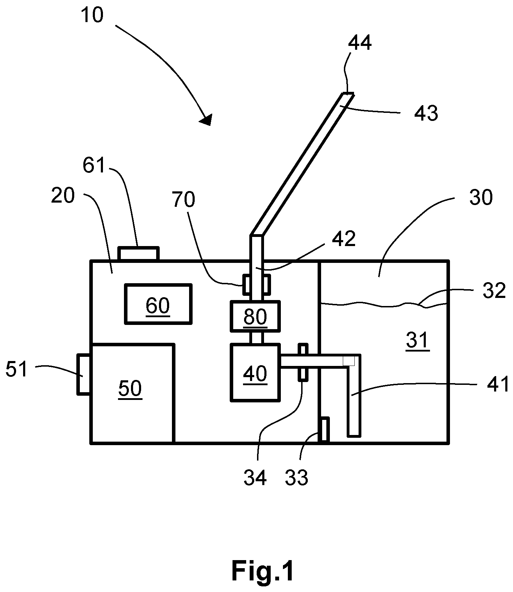

Fig.1 zeigt eine schematische Darstellung eines Mundhöhlenreinigungsgerätes 10 ist zusammen mit einem angesetzten Flüssigkeitsbehälter 30.

Es hat ein Gehäuse 20, wobei in dem Gehäuse 20 eine Pumpe 40 angeordnet ist. Ferner ist eine elektronische Kontrolleinheit 60 vorgesehen ist, die (ohne, dass die elektrischen Verbindungskabel dargestellt sind) mit allen elektrischen und elektronischen Bauteilen und damit auch insbesondere mit der Pumpe 40 verbunden ist.

Ein Flüssigkeitsbehälter 30 für eine Aufnahme einer zur Reinigung vorgesehenen Flüssigkeit 31 ist an das Gehäuse angeflanscht dargestellt. Dies kann ein aufschraubbarer oder streckbarer Glas- oder Kunststoffbehälter sein. Es ist vorzugsweise abnehmbar und leicht zu reinigen, ggf. auch in der Geschirrwaschmaschine zu waschen. Es kann auch ein faltbarer oder zusammenklappbarer Flüssigkeitsbehälter 30 sein. Es ist von Vorteil, wenn der Flüssigkeitsbehälter 30 an dem Gehäuse 20 austauschbar befestigbar ist. Mit dem Bezugszeichen 32 ist ein Wasserniveau eingezeichnet. Der Flüssigkeitsbehälter 30 kann auch ausgelegt sein, um eine maximale Flüssigkeitsmenge für einen Reinigungsschritt anzugeben, da bei einem bevorzugten Einsatz des Geräts 10 das Wasser nach dem Spülen in der Mundhöhle getrunken wird. Der Flüssigkeitsbehälter 30 kann insbesondere ein Wasservolumen von 200 bis 700 Milliliter, insbesondere einen halben Liter aufnehmen.

In den Flüssigkeitsbehälter 30 ragt ein Ansaugrohr 41, welches in dem Gehäuse als Abgaberöhrchen 43 durch und über die Pumpe 40 verläuft und dann am gegenüberliegenden Ende in einer Abgabeöffnung 44 endet. Die Abgabeöffnung kann verschiedentlich, je nach Abgaberöhrchen ausgelegt sein. Es kann eine einfache Öffnung sein, es kann auf eine Prallplatte gerichtete Öffnung sein, so dass eine gegenüber der Prallplatte angeordnete Oberfläche, wie die Zunge eines Benutzers mit dem Wasserstrahl beaufschlagbar ist.

Dabei ist die Flüssigkeit 31 aus dem Flüssigkeitsbehälter 30 über die Pumpe 40 zur Abgabeöffnung 44 förderbar. Die Pumpe 40 wird von der Kontrolleinheit 60 insbesondere in getaktet betrieben. Das heisst, dass die Kontrolleinheit 60 bei Start des Gerätes über das Abgaberöhrchen 43 taktmässig das heisse Wasser gegen die Zähne pumpt und stellt dann automatisch über ein Zeitglied die Pumpe 40 wieder ab. Jetzt kann der Benutzer das Wasser unterschlucken oder ausspucken. Die Pumpe 40 wird dann wiederum über ein Zeitglied intervallweise eingeschaltet, insbesondere durch Betätigen eines Knopfes, dass der Benutzer bereit ist, bis der Wasserbehälter 30 leer ist. Ein Rückschlagventil in dem Abgaberöhrchen 43 verhindert beim Stopp der Pumpe 40, dass das Wasser nicht zurück in den Wasserbehälter 30 fliesst. Wenn die Kontrolleinheit 60 ausgestaltet ist, dass die Pumpe im Takt arbeitet, dann wird der Benutzer gezwungen, beim Stillstand in den Pausen das Wasser herunterzuschlucken oder auszuspucken. Während dieser Pausen wirkt dann das Rückschlagventil, damit das Wasser in der Pumpe 40 beim Stillstand nicht zurück in den Wasserbehälter 30 fliest.

Die Pumpe 40 kann intervallweise nicht nur automatisch nach einer vorbestimmten Pausenzeit oder durch Betätigen eines Knopfes eingeschaltet werden, sondern es kann an der Abgabeöffnung 44 ein Lichtsensor vorgesehen sein, der bei Erkennen des Ausbleibens eines Lichteinfalls, dass die Abgabeöffnung 44 in der Mundhöhle des Benutzers positioniert ist und damit ein neues Reinigungsintervall startbar ist.

Eine Temperaturmesseinrichtung 70 ist in oder an dem Abgaberöhrchen 43 (oder auch im Bereich 41) zur Bestimmung der Temperatur der Flüssigkeit 31 vorgesehen. Die Temperaturmesseinrichtung 70 ist mit der elektronischen Kontrolleinheit 60 verbunden. Die elektronische Kontrolleinheit 60 ist nun ausgestaltet, die Pumpe 40 bei einer Betätigung 61 des Zahnreinigungsgerätes 10 nur anzuschalten, wenn die Temperatur der abgegebenen gepumpten Flüssigkeit zwischen 45 und 55 Grad Celsius beträgt.

Bei einer einfachen Version des Gerätes 10 ist die Pumpe 40 eine manuelle Pumpe, also ein Handgriff, durch dessen Betätigung das Wasser gepumpt wird. Durch Drücken des Handgriffs wird dann Flüssigkeit aus dem Behälter 30 nach oben in das Röhrchen 43 gesaugt. Eine Pumpe 40 als Mittel zum Erzeugen von Druck und zum Ansaugen von Flüssigkeit ist jedoch bevorzugt.

Zur Stromversorgung der Pumpe 40 und der elektronischen Kontrolleinheit 60 ist ein Akkumulator 50 vorgesehen, der auch als eine Batterie ausgestaltet sein kann. Vorzugsweise ist ein Ladeanschluss 51 vorgesehen; dies kann insbesondere ein USB-Ladeanschluss sein. Bei einem Gerät gemäss der Erfindung ergibt sich bei heutiger Batterietechnologie eine Laufzeit einer Ladung von ca. 10 Tagen bis zwei Wochen bei drei Anwendungen pro Tag.

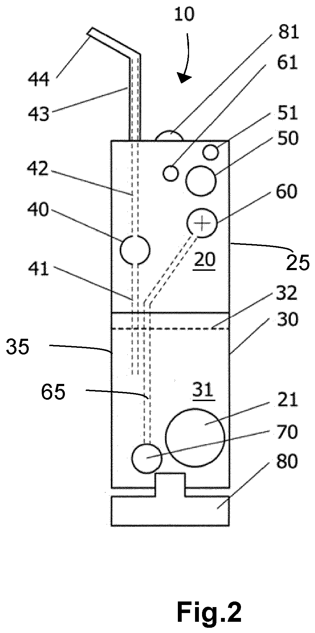

Wesentlich ist der Betrieb in der Temperatur kontrolliertem Wasser zwischen 45°C und 55°C und vorteilhafterweise zwischen 45°C und 50°C. Damit dies sichergestellt ist, ist eine Temperaturmesseinrichtung 70 im Gerät 10 vorgesehen, die die Temperatur an mindestens einem Punkt in dem Weg der Flüssigkeit von dem Flüssigkeitsbehälter 30 bis zur Abgabeöffnung 44 feststellt. Bei der Ausführung nach der Fig. 1 ist diese Messeinrichtung im Gehäuse 20 im Bereich des Wasserflusses durch das Gerät 10 vorgesehen, bei der Ausführung nach Fig. 2 wird die Temperatur direkt im Flüssigkeitsbehälter 30 gemessen.

Es können verschiedene Betriebsmodi vorgesehen sein, insbesondere mit unterschiedlichem Wasserdruck, also einer einstellbaren Pumpe, und mit unterschiedlichen Taktmodi, mit unterschiedlichen Zeitabständen zwischen den plusweise ausgestossenen Wassermengen.

Die Temperaturmessung durch den Fühler 70 kann bei zu heissem Wasser die Pumpe 40 zum Schutze des Benutzers ausstellen. Bei einer bevorzugten Ausführung ist bei etwas nicht ausreichend warmen Wasser die Präsenz eines Heizelementes 80 eine wertvolle Ergänzung. Dieses ist in oder an dem Abgaberöhrchen 41 und/oder 43 stromaufwärts vor der Temperaturmesseinrichtung 70 vorgesehen, beispielsweise zwischen Pumpe 40 und Temperaturmesseinrichtung 70 vor Austritt der Flüssigkeit aus dem Gehäuse 20. Das Heizelement 80 ist mit der elektronischen Kontrolleinheit 60 verbunden, wobei die elektronische Kontrolleinheit 60 ausgestaltet ist, um das Heizelement 80 zum Aufheizen der gepumpten Flüssigkeit anzuschalten, wenn die gemessene Temperatur der gepumpten Flüssigkeit unter 45 Grad Celsius liegt und die Heizleistung 80 dimensionierbar ist, so dass die Temperatur der abgegebenen gepumpten Flüssigkeit über 45 Grad Celsius liegt. Dies bedeutet, dass es nicht vorgesehen ist, eine Flüssigkeit mit Raumtemperatur von z.B. 20 Grad Celsius mit dem Heizelement 80 auf 45 Grad Celsius und mehr zu erwärmen, sondern warmes Wasser, dessen Temperatur nur etwas unter dem Schwellwert von 45 Grad Celsius liegt. Dies betrifft eine akkumulatorbetriebene Ausführung.

Vorteilhafterweise ist ein Wasserstandsmesser 33 an oder in dem Flüssigkeitsbehälter 30 an dem Gehäuse 20 vorgesehen ist, der mit der elektronischen Kontrolleinheit 60 verbunden ist, um die Leerung des Flüssigkeitsbehälters 30 festzustellen. Das schützt zum einen die Pumpe 40 und zum anderen ist damit die vollständige Menge von Wasser für einen Reinigungsgang vorgegeben. Sofern auf einen Wasserstandsmesser 33 verzichtet wird, muss die Pumpe 40 auch leer laufen können.

Alternativ oder zusätzlich kann ein Durchflussmesser 34 in dem Abgaberöhrchen 43 vorgesehen sein, der mit der elektronischen Kontrolleinheit 60 verbunden ist, um die gepumpte Flüssigkeitsmenge festzustellen und bei Überschreiten eines Schwellwertes für eine vorbestimmten Minimalmenge ein Anzeigesignal, insbesondere ein optisches oder ein akustisches Signal zu erzeugen.

Fig.2 zeigt eine schematische Darstellung eines weiteren Mundhöhlenreinigungsgerätes 10 zusammen mit einem angesetzten Flüssigkeitsbehälter 30. Gleiche Merkmale sind in beiden Figuren mit den gleichen Bezugszeichen versehen.

Optional kann der Flüssigkeitsbehälter 30 auch eine zusätzliche Öffnung 21 zum Befüllen des Behälters mit Flüssigkeit 31 aufweisen.

In dem Gehäuse 20 sind wiederum eine Pumpe 40 und eine elektronische Kontrolleinheit 60 vorgesehen ist. Mit dem Bezugszeichen 65 ist eine Verbindungsleitung dargestellt, die insbesondere ein flexibles Röhrchen sein, an deren unterem Ende die Temperaturmesseinrichung 70 angeordnet ist, die somit direkt die Temperatur der Flüssigkeit 31 in dem Behälter 30 misst.

Der Flüssigkeitsbehälter 30 ist am unteren Ende des Gehäuses 20 angeordnet, wobei beispielsweise die Behälterwand 35, insbesondere dichtend, verschiebbar über die Gehäusewand 25 schiebbar ist. Mit anderen Worten, in einem zusammengeschobenen Zustand umgibt die Behälterwand 35 mindestens den unteren Bereich der Gehäusewand 25 und ist damit in der Höhe nahezu auf die Hälfte gegenüber der Höhe beim Einsatz reduziert. Dies kann als ein streckbarer Behälter 30 bezeichnet werden.

Die genannte Temperaturmesseinrichtung 70 ist hier am Ende einer Sensorleitung 65 angeordnet und reicht getrennt in den Behälter 30 und insbesondere in den von der Flüssigkeit 31 eingenommenen Raum. Die Temperaturmesseinrichtung 70 ist über diese Leitung 65 mit der elektronischen Kontrolleinheit 60 verbunden. Die elektronische Kontrolleinheit 60 ist nun ausgestaltet, die Pumpe 40 bei einer Betätigung 61 des Zahnreinigungsgerätes 10 nur anzuschalten, wenn die Temperatur der abgegebenen gepumpten Flüssigkeit zwischen 45 und 55 Grad Celsius beträgt. Die Temperaturmesseinrichtung kann auch mit einer Anzeige verbunden sein, die dem Benutzer die Temperatur der Flüssigkeit visuell anzeigt.

Optional kann auch eine Temperaturanzeige 81, Thermoetiketten, oder eine Thermofarbe am Schlauch oder am Behälter 30 vorgesehen sein. Insbesondere kann aber ein flexibler Temperaturfühler 70 im Schlauch montiert sein, um sicherzustellen, dass das Wasser nur gepumpt wird, wenn es mehr als 45 Grad Celsius hat. Eine Maximaltemperatur von 55 Grad Celsius ist sinnvoll, um keine Verbrühungen des Mundraums sicherzustellen. Der Behälter 40 kann ganz oder teilweise thermochrom bedruckt werden, um dem Benutzer die Temperatur des Wassers in dem Behälter 40 anzuzeigen, insbesondere, ob die Temperatur im gewünschten Zielbereich liegt.

Die Ausführung nach der Fig. 2 hat einen Ständer, in dem das Heizelement 80 integriert ist. Dies kann das Heizelement 80 als solches umfassen, welches dann den Boden und den darüberliegenden Flüssigkeitsanteil erwärmt. Es kann auch nur eine Induktionsspule enthalten, mit der elektrische Energie auf ein in dem Boden des Flüssigkeitsbehälters 30 angeordnetes Heizelement übertragen wird, mit dem dann die Flüssigkeit 31 erwärmt wird. Dann kann die Heizung über eine Verbindung mit dem Stromnetz beispielsweise des Badezimmers verbunden sein und die Vorrichtung wird unabhängiger von der Verfügbarkeit von Warmwasser. Eine optische Anzeige oder ein externer Anschluss für eine Anzeige ist mit dem Bezugszeichen 81 versehen.

### BEZUGSZEICHENLISTE

- 10: Portables Zahnreinigungsgerät
- 20: Gehäuse
- 21: Deckel zum Öffnen des Flüssigkeitsbehälters
- 25: Gehäusewand
- 30: Flüssigkeitsbehälter
- 31: Wasser / Flüssigkeit
- 32: Wasserniveau
- 33: Wasserniveaumesser
- 34: Durchflussmesser
- 35: Behälterwand
- 40: Pumpe
- 41: Ansaugrohr
- 42: Rohrleitung im Gehäuse
- 43: Abgaberöhrchen
- 44: Abgabeöffnung (optional Düse)
- 50: Akkumulator (optional Batterie)
- 51: Ladeanschluss
- 60: Mikrocontroller
- 61: Betätigungsknopf
- 65: Verbindungsleitung
- 70: Temperaturmesseinrichtung
- 80: Heizelement
- 81: optische Anzeige oder externer Anschluss für eine Anzeige

## Patentansprüche

1. Portables Zahnreinigungsgerät (10) mit einem Gehäuse (20), mit einer in dem Gehäuse (20) angeordneten Pumpe (40), mit einer elektronischen Kontrolleinheit (60), mit einem Flüssigkeitsbehälter (30) für eine Aufnahme einer zur Reinigung vorgesehenen Flüssigkeit (31), und mit einem mit diesem verbundenen Abgaberöhrchen (41, 43), welches in einer Abgabeöffnung (44) endet, wobei die Flüssigkeit (31) aus dem Flüssigkeitsbehälter über die Pumpe (40) zur Abgabeöffnung (44) gefördert wird, **dadurch gekennzeichnet, dass** eine Temperaturmesseinrichtung (70) in dem Flüssigekeitsbehälter (30) oder in oder an dem Abgaberöhrchen (41, 43) zur Bestimmung der Temperatur der Flüssigkeit (31) vorgesehen ist, wobei die Temperaturmesseinrichtung (70) mit der elektronischen Kontrolleinheit (60) verbunden ist, wobei die elektronische Kontrolleinheit (60) ausgestaltet ist, die Pumpe (40) bei einer Betätigung (61) des Zahnreinigungsgerätes (10) nur anzuschalten, wenn die Temperatur der abgegebenen gepumpten Flüssigkeit zwischen 45 und 55 Grad Celsius beträgt.

2. Portables Zahnreinigungsgerät (10) nach Anspruch 1, **dadurch gekennzeichnet, dass** ein Heizelement (80) in oder an dem Abgaberöhrchen (41, 43) stromaufwärts vor der Temperaturmesseinrichtung (70) vorgesehen ist, welches mit der elektronischen Kontrolleinheit (60) verbunden ist, wobei die elektronische Kontrolleinheit (60) ausgestaltet ist, um das Heizelement (80) zum Aufheizen der gepumpten Flüssigkeit anzuschalten, wenn die gemessene Temperatur der gepumpten Flüssigkeit unter 45 Grad Celsius liegt und die Heizleistung (80) dimensionierbar ist, so dass die Temperatur der abgegebenen gepumpten Flüssigkeit über 45 Grad Celsius liegt.

3. Portables Zahnreinigungsgerät (10) nach Anspruch 1 oder 2, **dadurch gekennzeichnet, dass** ein Akkumulator (50) in dem Gehäuse (20) vorgesehen ist.

4. Portables Zahnreinigungsgerät (10) nach Anspruch 3, **dadurch gekennzeichnet, dass** ein Ladeanschluss (51), insbesondere ein USB-Ladeanschluss vorgesehen ist.

5. Portables Zahnreinigungsgerät (10) nach einem der Ansprüche 1 bis 4, **dadurch gekennzeichnet, dass** der Flüssigkeitsbehälter (30) an dem Gehäuse (20) austauschbar befestigbar ist.

6. Portables Zahnreinigungsgerät (10) nach einem der Ansprüche 1 bis 5, **dadurch gekennzeichnet, dass** ein Wasserstandsmesser (33) an oder in dem Flüssigkeitsbehälter (30) an dem Gehäuse (20) vorgesehen ist, der mit der elektronischen Kontrolleinheit (60) verbunden ist, um die Leerung des Flüssigkeitsbehälters (30) festzustellen.

7. Portables Zahnreinigungsgerät (10) nach einem der Ansprüche 1 bis 6, **dadurch gekennzeichnet, dass** ein elektrisches Heizelement (80) vorgesehen ist, mit dem die Temperatur der Flüssigkeit in dem Flüssigkeitsbehälter (30) oder in dem Abgaberöhrchen (41, 43) aufheizbar ist, insbesondere auf eine Temperatur zwischen 45 und 55 Grad Celsius, vorzugsweise zwischen 45 und 50 Grad Celsius, optional auf eine in diesem Bereich liegende Temperatur regelt.

8. Portables Zahnreinigungsgerät (10) nach Anspruch 7, dass die Kontrolleinheit ausgestaltet ist, das Heizelement (80) nur anzuschalten, wenn die Temeperaturmesseinrichtung (70) eine Temperatur misst, die einer Temperatur der gepumpten Flüssigkeit von weniger als 45 Grad Celsius entspricht.

9. Portables Zahnreinigungsgerät (10) nach Anspruch 7 oder 8, dass es einen mit Netzspannung verbindbarem Fuss aufweist, dass das Heizelement (80) in dem Fuss und/oder dem Boden des Flüssigkeitsbehälters (30) angeordnet ist, wobei der Behälter (30) mechanisch und optional elektrisch mit dem Fuss verbindbar ist.

10. Portables Zahnreinigungsgerät (10) nach einem der Ansprüche 1 bis 9, **dadurch gekennzeichnet, dass** ein Durchflussmesser (34) in dem Abgaberöhrchen (41, 43) vorgesehen ist, der mit der elektronischen Kontrolleinheit (60) verbunden ist, um die gepumpte Flüssigkeitsmenge festzustellen und bei Überschreiten eines Schwellwertes für eine vorbestimmten Minimalmenge ein Anzeigesignal, insbesondere ein optisches oder ein akustisches Signal zu erzeugen.
